Europäisches Patentamt

European Patent Office

Office européen des brevets

(11) Publication number: **0 095 257**
**B1**

# EUROPEAN PATENT SPECIFICATION

(45) Date of publication of patent specification: **05.03.86**

(51) Int. Cl.⁴: **F 16 G 5/16**

(21) Application number: **83302401.1**

(22) Date of filing: **28.04.83**

(54) **Metal band and drive block assembly.**

(30) Priority: **21.05.82 US 380682**

(43) Date of publication of application:
**30.11.83 Bulletin 83/48**

(45) Publication of the grant of the patent:
**05.03.86 Bulletin 86/10**

(84) Designated Contracting States:
**DE FR GB**

(56) References cited:
**EP-A-0 014 013**
**CH-A- 256 918**
**DE-A-2 505 228**
**DE-A-2 643 528**
**DE-A-2 903 439**
**US-A-3 720 113**

(73) Proprietor: **GENERAL MOTORS CORPORATION**
**General Motors Building 3044 West Grand Boulevard**
**Detroit Michigan 48202 (US)**

(72) Inventor: **Cataldo, Roy S.**
**20230 Plantation**
**Birmingham Michigan 48010 (US)**

(74) Representative: **Breakwell, John Neil Bower et al**
**GM Patent Section Luton Office (F6) P.O. Box No. 3 Kimpton Road**
**Luton Beds. LU2 0SY (GB)**

Courier Press, Leamington Spa, England.

## Description

This invention relates to a metal band and drive block assembly as specified in the preamble of claim 1.

A metal band and drive block assembly is disclosed in US—A—3 720 113 which requires that the continuous metal bands 4 to 7 be severely stressed at assembly when they are fitted between the edges 12 and 13.

A metal band and drive block assembly for a continuous belt drive mechanism corresponding to the preamble of claim 1 is disclosed in US—A—4 080 841 which avoids overstressing of the metal bands at assembly but involves the use of pins for retention of the metal bands.

The present invention is concerned with a metal band and drive block assembly permitting assembly of one or more such metal bands at the belt support surface of the individual wedge blocks not only without the need for pins for retention but also without overstressing of the metal bands.

For this purpose a metal band and drive block assembly in accordance with the present invention is characterised by the features specified in the characterising portion of claim 1.

Thereby, it is possible to achieve a metal band and drive block assembly having a plurality of drive blocks disposed on a continuous metal band wherein the drive blocks and the metal band have adjacently disposed curved surfaces providing a sliding abutment therebetween and wherein the drive blocks have a band assembly opening which is outwardly diverging and dimensionsed to permit flexing of the band during assembly of the blocks on the band without the yield strength of the band material being exceeded.

EP—A—0 014 013 discloses a metal band and drive block assembly in which the drive blocks are bevelled radially inwardly underneath a tilting line for enabling the bending of the driving belt, and are also provided with projections and recesses forming interengaging coupling means for mutual centring thereof.

In the drawing:

Figure 1 is a fragmentary sectional elevational view showing a portion of a metal band and drive block assembly in accordance with the present invention;

Figure 2 is a view on the line 2—2 of Figure 1, in the direction of the arrows; and

Figure 3 is a view on the line 3—3 of Figure 2, in the direction of the arrows.

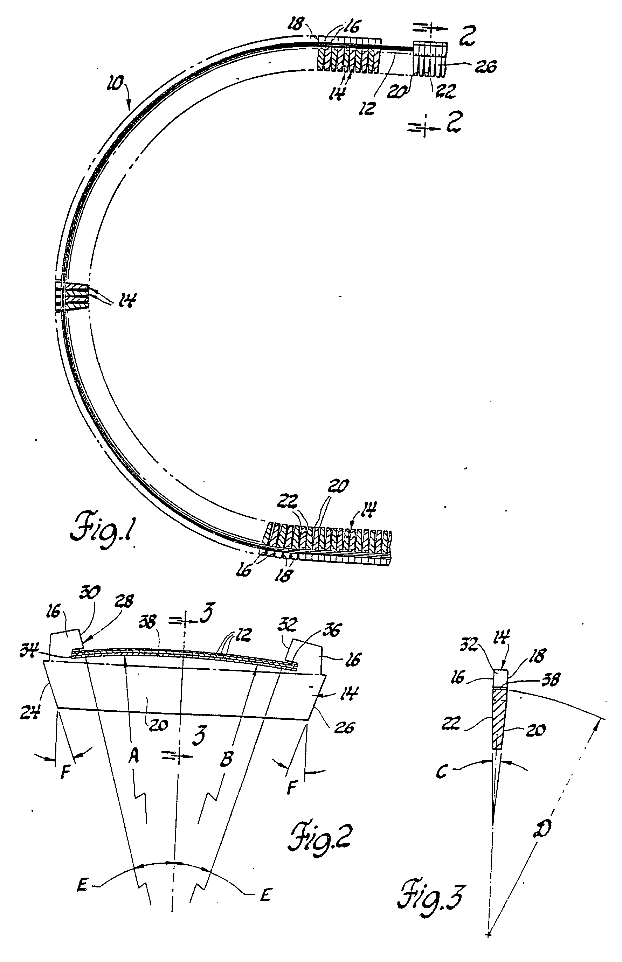

In Figure 1 of the drawing, a metal band and drive block assembly 10 is shown comprising a plurality of metal bands 12 on which are arranged a plurality of drive blocks 14. In general, such assemblies are well-known. As is best seen in Figure 3, the drive blocks 14 have substantially flat parallel surfaces 16 and 18 transverse to the longitudinal axis of the bands 12, and tapered surfaces 20 and 22 disposed inwardly of the band and block contact area. These tapered surfaces 20 and 22 permit the band to accommodate operation with various pulley diameters, and also permit the use of the belt 10 in what is commonly termed a continuous variable belt drive. The tapered surfaces 22 and 20 have angled end surfaces 24 and 26 which are adapted to frictionally engage pulleys, not shown, when the belt is operating in a pulley drive system.

The portion of each drive block 14 encompassed by the parallel surfaces 16 and 18 has a central opening which is generally designated 28 and is defined bay end surfaces 30 and 32 that diverge relative to each other as they extend towards the outer extent of the opening 28. The inner end of the end surface 30 is defined by an upper edge of a slot 34, and the inner end of the surface 32 is defined by an upper edge of a slot 36. The lower surface of both slots 34 and 36 is defined by a transversely arcuate belt support surface in the form of a radius surface 38 which has a cross-section radius dimension A and against which the metal bands 12 are disposed.

The metal bands 12 have a radius dimension B when viewed in cross-section as seen in Figure 2. The radius dimensions A and B can be substantially equal, or the radius A can be 1% less than the radius B. In most assemblies it is preferred for the radius A to be 1% less than the radius B. The surfaces 30 and 32 diverge from the central axis of the drive block 14 at an angle E as seen in Figure 2, and the end surfaces 24 and 26 are disposed at an angle F relative to the central axis of the drive blocks 14.

The surfaces 30 and 32 are designed to permit flexing of the metal bands 12 in a manner which reduces the radius dimension B at assembly without exceeding the yield stress of the metal bands 12. It is accordingly preferred that the larger transverse dimension provided between the surfaces 30 and 32 have a span greater than 78%, and preferably a minimum span equal to 79% of the metal band width, and that the minimum span of the distance between the surfaces 30 and 32 be equal to 76% of the metal band width. The slots 34 and 36 provide for retention of the metal bands 12 after assembly, and have a minimum extent equal to 20% of the width of the metal bands.

As is seen in Figure 3, the drive blocks 14 have a taper angle equal to C, which is equally divided between the surfaces 20 and 22 by tapering both sides of the drive block. Such symmetrical tapering reduces tilting of individual blocks during relative movement caused by engagement with the drive pulley, thereby reducing internal friction in the system. The radius surface 38 of the drive blocks 14, as seen in Figure 3, also has a radius dimension D disposed transversely to the radius dimension A: the surface 38 is thus a compound- curved surface.

In one embodiment of the drive block 14, the dimension A is equal to 203 cm (80 inches), the dimension B is equal to 207 cm (81.5 inches), the dimensions C is equal to 1.5°, the dimension D is equal to 2.54 cm (1 inch), the dimension E is equal to 17.5° and the dimension F is equal to 19°. In this embodiment the maximum span between the surfaces 30 and 32 is equal to 2.08 cm (0.82 inch), and the normal dimension from end to end of the slots 34 and 36 is 2.79 cm (1.1 inches).

In such a metal band and drive block assembly in accordance with the invention, the configuration of the drive blocks permits assembly of the metal band to the drive blocks not only without the need for pins for retention but also without overstressing of the metal bands.

From the foregoing it will be evident that a simple and inexpensive metal band and drive block assembly is available within the scope of the present invention.

## Claims

1. A metal band and drive block assembly for a continuous belt drive mechanism, comprising a continuous metal band (12) having a plurality of wedge blocks (14) disposed in abutting relation on the metal band, each wedge block having a transversely arcuate belt support surface (38) and a band entering opening (28), characterised in that the metal band has a constant-radius curved transverse cross-section as viewed in an axial plane, the belt support surface (38) of each wedge block (14) has a radius dimension (A) which is 2% less than, or is substantially equal to, the constant-radius curve dimension (B) of the metal band, and has an arc length dimension substantially equal to the axial width of the metal band, the band entering opening (28) of each wedge block has an outer aperture dimensioned to have a span greater than 78% of the metal band width, an inner aperture dimensioned to have a minimum span width of 76% of the metal band width, and side walls (30 and 32) converging from the outer to the inner aperture, whereby the metal band (12) may be flexed in the radial direction decreasing the radius curve dimension (B) to enter the band opening during assembly without the yield stress of the metal band being exceeded, such that after assembly the inner surface of the metal band rests on the arc length dimension, and a pair of retaining slots (34, 36) are formed integrally in the wedge block and are disposed between the inner aperture and the belt support surface arc length at opposite ends thereof, the retaining slots each having a laterally extending surface spaced from the belt support surface and the said slots having a combined minimum extent equal to 20% of the width of the metal band.

2. A metal band and drive block assembly according to claim 1, characterised in that the band entering opening (28) of each wedge block (14) has an outer aperture dimensioned to have a minimum span equal to 79% of the width of the metal band (12).

## Patentansprüche

1. Anordnung aus Metallband und Antriebsklötzen für einen kontinuierlichen Riemenantriebsmechanismus, mit einem kontinuierlichen Metallband (12), an dem eine Vielzahl von Keilklötzen (14) aneinanderstoßend an dem Metallband angeordnet sind, wobei jeder Keilklotz eine querverlaufend gekrümmte Riemenstützfläche (38) und eine Eintrittsöffnung (28) für das Band enthält, dadurch gekennzeichnet, daß das Metallband einen gekrümmten Querschnitt mit konstantem Radius, in einer axialen Ebene gesehen, besitzt, die Riemenstützfläche (38) jedes Keilklotzes (14) eine Radiusabmessung (A) besitzt, die 2% geringer als oder im wesentlichen gleich der Konstantradius-Krümmungsabmessung (B) des Metallbandes ist und eine Bogenlängenabmessung besitzt, die im wesentlichen gleich der Axialbreite des Metallbandes ist, daß die Eintrittsöffnung (28) für das Band jedes Keilblockes eine äußere Öffnung besitzt, die so bemessen ist, daß sie eine Spanne von mehr als 78% der Metallband-Breite aufweist, eine innere Öffnung, so bemessen, daß sie eine minimale Spannbreite von 76% der Metallband-Breite aufweist und von der äußeren zur inneren Öffnung konvergierende Seitenwände (30 und 32), wodurch das Metallband (12) in der Radialrichtung abgebogen werden kann unter Abnahme der Krümmungsradius-Abmessung (B), um während des Zusammenbaues in die Band-Öffnung einzutreten, ohne die Fließspannungsgrenze des Metallbandes zu überschreiten, so daß nach dem Zusammenbau die Innenfläche des Metallbandes auf der Bogenlängen-Abmessung aufsitzt, und daß zwei Rückhalte-Schlitze (34, 36) integral in dem Keilklotz ausgebildet und so zwischen der inneren Öffnung und der Riemenstützflächen-Bogenlänge an entgegengesetzt liegenden Enden derselben angeordnet sind, wobei die Rückhalteschlitze jeweils eine sich in Querrichtung erstreckende Fläche mit Abstand von der Riemenstützfläche besitzen und die Schlitze eine kombinierte Minimalerstreckung gleich 20% der Breite des Metallbandes besitzen.

2. Anordnung aus Metallband und Antriebsklötzen nach Anspruch 1, dadurch gekennzeichnet, daß die Eintrittsöffnung (28) für das Band jedes Keilklotzes (14) eine äußere Öffnung besitzt, die so bemessen ist, daß sie eine minimale-Spanne gleich 79% der Breite des Metallbandes (12) besitzt.

## Revendications

1. Une courroie constituée d'une bande métallique et de blocs d'entraînement pour un mécanisme d'entraînement par courroie continue, comprenant une bande métallique continue (12) munie d'une pluralité de blocs en forme de coin (14) disposés en relation de butée sur la bande métallique, chaque bloc en forme de coin ayant une surface (38) de support de la courroie arquée dans la direction transversale et une ouverture d'entrée (28) de la bande, caractérisée en ce que la bande métallique a une section transversale incurvée à rayon constant, lorsqu'on la regarde dans un plan axial, la surface de support (38) de la courroie, de chaque bloc en forme de coin (14) a

0 095 257

une dimension de rayon (A) qui est inférieure de 2%, ou sensiblement égale à la dimension du rayon de courbure (B) de la courbe à rayon constant de la bande métallique, et a une longueur d'arc de dimension sensiblement égale à la largeur axiale de la bande métallique, l'ouverture d'entrée (28) de la bande dans chaque bloc en forme de coin a une ouverture extérieure dimensionnée pour avoir une amplitude supérieure à 78% de la largeur de la bande métallique, une ouverture intérieure dimensionnée pour avoir une largeur d'amplitude minimale égale à 76% de la largeur de la bande métallique, et des parois latérales (30 et 32) convergeant depuis l'extérieur jusqu'à l'ouverture intérieure, ce par quoi la bande métallique (12) peut être fléchie dans la direction radiale, diminuant la dimension (B) du rayon de courbure, afin d'entrer par l'ouverture pour la bande pendant l'assemblage sans que la limite élastique de la bande métallique soit dépassé, de telle sorte qu'après l'assemblage, la surface intérieure de la bande métallique repose suivant la dimension longitudinale de l'arc, et une paire de fentes de retenue (34, 36) sont formées dans la matière du bloc en forme de coin et sont disposées entre l'ouverture intérieure et la longueur d'arc de la surface de support de la courroie à leurs extrémités opposées, les fentes de retenue ayant chacune une surface s'étendant latéralement, espacée de la surface de support de la courroie, et les dites fentes ayant une étendue minimale combinée égale à 20% de la largeur de la bande métallique.

2. Une courroie constituée d'une bande métalique et de blocs d'entraînement selon la revendication 1, caractérisée en ce que l'ouverture d'entrée (28) de la bande dans chaque bloc en forme de coin (14) a une ouverture extérieure dimensionnée pour avoir une amplitude égale à 79% de la largeur de la bande métallique (12).

4

0 095 257

Fig.1

Fig.2

Fig.3

1